# EUROPEAN PATENT SPECIFICATION

(11) **EP 4 063 453 B1**
(45) Date of publication and mention of the grant of the patent: **27.03.2024**
(21) Application number: 20901096.6
(22) Date of filing: 27.10.2020
(51) Int. Cl.: C08L 23/12, C08L 23/08, C08L 83/10, B29K 23/00, B29C 49/00, C08G 77/12, C08G 77/20, C08K 3/40, C08K 3/08

(54) **POLYPROPYLENE COMPOSITION, PREPARATION METHOD THEREFOR AND USE THEREOF**
POLYPROPYLENZUSAMMENSETZUNG, HERSTELLUNGSVERFAHREN DAFÜR UND VERWENDUNG DAVON
COMPOSITION DE POLYPROPYLÈNE, SON PROCÉDÉ DE PRÉPARATION ET SON UTILISATION

(30) Priority: 17.12.2019 CN 201911303504
(43) Date of publication of application: 28.09.2022
(73) Proprietor: Kingfa Sci. & Tech. Co., Ltd., Guangzhou, Guangdong 510663 (CN)
(72) Inventor: SU, Juanxia, Guangzhou, Guangdong 510663 (CN); YANG, Bo, Guangzhou, Guangdong 510663 (CN); HUANG, Xianbo, Guangzhou, Guangdong 510663 (CN); YE, Nanbiao, Guangzhou, Guangdong 510663 (CN); LEI, Liang, Guangzhou, Guangdong 510663 (CN); PENG, Li, Guangzhou, Guangdong 510663 (CN); LU, Chaoliang, Guangzhou, Guangdong 510663 (CN); CHEN, Yezhong, Guangzhou, Guangdong 510663 (CN); LUO, Zhongfu, Guangzhou, Guangdong 510663 (CN); DING, Zhengya, Guangzhou, Guangdong 510663 (CN)
(74) Representative: dompatent von Kreisler Selting Werner - Partnerschaft von Patent- und Rechtsanwälten mbB
(86) International application number: PCT/CN2020/124014
(87) International publication number: WO 2021/120864

(56) References cited:
- EP-A1- 2 581 412
- WO-A2-2014/030123
- CN-A- 101 445 639
- CN-A- 106 674 754
- CN-A- 109 666 218
- CN-A- 109 721 844
- CN-A- 111 087 686
- US-A1- 2006 127 498
- US-A1- 2019 127 562

## Description

### TECHNICAL FIELD

The invention relates to the technical field of polymer materials, and in particular relates to a polypropylene composition, a preparation method and a use thereof.

### BACKGROUND

Compared with other general-purpose plastics, polypropylene has advantages of good mechanical properties, low density, good rigidity, high strength and good electrical insulation properties, and is widely used in home appliances and automotive products. When modified polypropylene is used in washing machines and small household appliances, when used for too long, the polypropylene material is easily stained, and bacteria and mold grow at the same time, which limits the application scope of the polypropylene material. In the field of automotive applications, when the vehicle is in use, cosmetics and food of driver and passengers are easy to stain the interior materials, and some of the dirt is difficult to clean. With a promotion of new travel modes (car sharing/online car-hailing), there is a demand for antimicrobial and stain-resistant properties of automotive materials.

Chinese patent application CN 106117802 B discloses a powdered ore enhanced polypropylene composition and a preparation method thereof. In formula of the powdered ore enhanced polypropylene composition, it is added with a specific content of an interface modifier (epoxy siloxane coupling agent), a high-hydrophobicity auxiliary and an antimicrobial agent, a surface polarity of the powdered ore enhanced polypropylene composition is changed, a hydrophobic property of the powdered ore enhanced polypropylene composition is improved, and antimicrobial and mildew-resistant properties of the powdered ore enhanced polypropylene composition is improved. Chinese patent application CN109294149A discloses a durable antimicrobial polypropylene plastic cup. A preparation method of the plastic cup is mainly by adding polydimethylsiloxane as a stain-resistant agent, however due to its insufficient dispersibility in the polypropylene resin matrix, ethylene bis stearamide needs to be added to assist.

Chinese patent application CN101591443A discloses a polypropylene grafted modified additive with water affinity and the organism affinity, wherein a segmer with water affinity and organism affinity may be polydimethylsiloxane. The modified additive has excellent adhesion with the polypropylene, and can improve surface anticoagulation and other biocompatibility properties of the polypropylene. However, a compatibility of polypropylene grafted polydimethylsiloxane with polypropylene is not discussed.

WO2014/030123 discloses polyolefin compositions with antimicrobial properties, which are given by the controlled release of elements or compounds with antimicrobial properties.

### SUMMARY OF THE INVENTION

An objective of the present invention is to provide a polypropylene composition with good antimicrobial effect and stain-resistant effect.

Another objective of the present invention is to provide a preparation method and a use of the above polypropylene composition.

The present invention is achieved through the following technical solutions.

A polypropylene composition, in parts by weight, includes the following components:
40-99 parts of a polypropylene resin;
15-30 parts of an ethylene-α olefin copolymer;
0.2-1 part of an antimicrobial agent; and
1-3 parts of a polypropylene grafted polydimethylsiloxane.

Preferably, in parts by weight, an amount of the antimicrobial agent is 0.2-0.4 parts. Under the resin matrix of the present invention, the amount of the antimicrobial agent can be greatly reduced.

The ethylene-α olefin copolymer is selected from at least one of ethylene-propylene copolymer, ethylene-hexene copolymer, ethylene-butene copolymer and ethylene-octene copolymer.

Generally, thermoplastic elastomers used in polypropylene include styrenes (including SBS, SIS, SEBS, and SEPS), polyolefins (mainly ethylene-α olefin copolymers), PP/EPDM blends, OBC and the like. Styrenics, PP/EPDM blends, and OBC cannot achieve the objectives of the present invention.

Preferably, a melt index of the ethylene-α olefin copolymer is 5-30 g/lOmin (190°C, 2.16 kg).

The antimicrobial agent is selected from at least one of zinc oxide, zeolite supported silver ion or glass-based supported silver ion.

Preferably, the polypropylene grafted polydimethylsiloxane has a grafting ratio of 60%-80% and a molecular weight of 600,000-800,000. The addition of polypropylene grafted polydimethylsiloxane can be enriched on surface of the material, which has a stain-resistant effect, reduce water residue and also can destroy growth environment of bacteria and improve an antimicrobial effect.

Polypropylene is a crystalline resin, and the antimicrobial agent is discharged outside a crystalline region and mainly distributed in an amorphous region during crystallization process of polypropylene. It finds in the present invention that by adding a certain amount of ethylene-α olefin copolymer with a high-melting index to polypropylene resin, it can be better deformed, broken and dispersed uniformly under a shearing action. Especially for a surface layer, a highly oriented and remarkable filamentous network structure is formed due to high shear during the injection molding process, which can increase exposure of a surface layer antimicrobial agent to enhance an antimicrobial effect.

Polysiloxane has a low surface tension and a good hydrophobic property. If enriched on the surface of the material, a stain-resistant property of the surface can be improved, such as shoe polish wiping property involved in this experiment. At the same time, due to its hydrophobic property, a surface layer of the material is more difficult to absorb water molecules in the air to form a water film, which has a certain effect on inhibiting growth of bacteria. However, enrichment of polysiloxane on the surface would destroy a filamentous network structure, which in turn reduces an antimicrobial property. Therefore, the present invention adopts polypropylene grafted polydimethylsiloxane, which is enriched on the surface without destroying the filamentous network structure, ensuring good stain-resistant effect and bactericidal effect and under a synergistic effect, obtaining an excellent antimicrobial property.

A certain amount of a filler may further be added to the composition of the present invention to improve other properties, in parts by weight, 0-30 parts of a filler is further included; the filler is selected from at least one of talc, calcium carbonate, wollastonite, barium sulfate, mica, microsilica, silicon dioxide, magnesium hydroxide and montmorillonite.

In the present invention, a particle size of the filler is not particularly limited.

In order to improve processing property or obtain other properties, in parts by weight, 0-10 parts of an auxiliary agent is further included; the auxiliary agent is selected from at least one of a lubricant and a color powder.

The lubricants may be: stearates and amides, such as zinc stearate, calcium stearate, ethylene bis-stearate amide and the like.

The color powder may be: titanium white, carbon black, phthalocyanine blue, iron red, titanium yellow and the like.

A preparation method of the above-mentioned polypropylene composition is weighing each component according to a weight ratio, adding to a high-speed mixer and mixing for 1-3 minutes with a rotating speed being 1,000-2,000 rpm, to obtain a premix; melting and extruding the premix through a twin-screw extruder, with a temperature of each zone of the screw being 190-230°C, and granulating in vacuum to obtain a product.

A use of the above-mentioned polypropylene composition is used in automotive interior parts such as instrument panels, sub-instrument panels, uprights, glove boxes, door panels, door sills, and air conditioner housings.

The present invention has the following beneficial effects.

In the present invention an antimicrobial system of ethylene-α olefin copolymer and polypropylene grafted polydimethylsiloxane is adopted, and a highly oriented and remarkable filamentary network structure due to high shearing during the injection molding process is formed, which can improve exposure of a surface layer antimicrobial agent, to enhance an antimicrobial effect, in synergy with a stain-resistant property after the polypropylene grafted polydimethylsiloxane enriched on the surface, a polypropylene composition with a good antimicrobial effect can be obtained under a low addition amount of the antimicrobial agent.

### Description of drawings

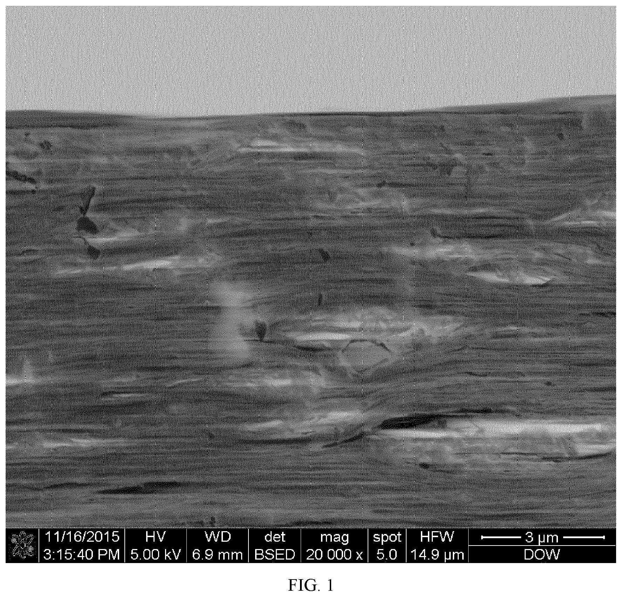

FIG. 1: an electron micrograph of surface of material with a filamentous network structure.

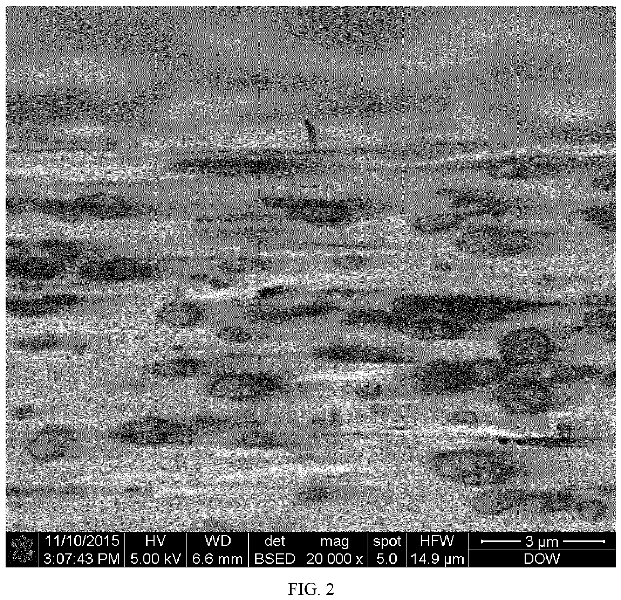

FIG. 2: an electron micrograph of surface of material without a filamentous network structure.

### DETAILED DESCRIPTION

The present invention will be further described below through specific implementations. The following embodiments are preferred implementations of the present invention, but the implementations of the present invention are not limited by the following embodiments.

Raw materials used in the present invention are as follows:
Polypropylene: N-Z30S;
Antimicrobial agent: silver ion antimicrobial agent BM-502FA, glass carrier;
Ethylene-octene copolymer, melt index of 8 g/lOmin (190°C, 2.16 kg), POE 8137;
Ethylene-butene copolymer, melt index of 5 g/lOmin (190°C, 2.16 kg), grade POE LC565;
SEBS, melt index of 10 g/lOmin (230°C, 2.16 kg), G1657 MS;
OBC, melt index of 5 g/lOmin (190°C, 2.16 kg), Infuse 9507;
Polypropylene grafted polydimethylsiloxane A: grafting ratio of 63%, and molecular weight of about 680,000;
Polypropylene grafted polydimethylsiloxane B: grafting ratio of 78%, and molecular weight of about 760,000;
Polypropylene grafted polydimethylsiloxane C: grafting ratio of 43%, and molecular weight of about 570,000;
Polydimethylsiloxane: TP-200, molecular weight of about 600,000;
Talc: TYT-777A;
Lubricant: zinc stearate; BS-2818;
Color powder: carbon black; M717.

A preparation method of polypropylene composition of Embodiments and Comparative Examples: weighing each component according to a weight ratio, adding to a high-speed mixer and mixing for 1-3 minutes with a rotating speed being 1,000-2,000 rpm, to obtain a premix; melting and extruding the premix through a twin-screw extruder, with a temperature of each zone of the screw being 190-230°C, and granulating in vacuum to obtain the polypropylene composition.

### Various property test methods:

The polypropylene composition was injection molded into a 100cm*100cm*3mm square plate in an injection molding machine, and a stain-resistant property and an antimicrobial property of sample surface were tested.
(1) Stain-resistant property test: 2 drops of LAORENTOU liquid shoe polish are dropped on the sample surface, after dried at room temperature for 24 hours, wiped with gauze and it is evaluated as follows: completely wiped without leaving traces is grade 3; partially wiped is grade 2; completely not wiped is grade 1.
(2) Antimicrobial property test: According to JIS Z 2801:2012, it is evaluated as follows: obvious bacteriostasis is A, general bacteriostasis is B, and no bacteriostasis is C.

**Table 1: Distribution ratio (in parts by weight) of each component of the polypropylene composition of Embodiments and test results of various properties**

| | Emb odim ent 1 | Emb odim ent 2 | Embo dimen t 3 | Embo dime nt 4 | Embo dime nt 5 | Embo dimen t 6 | Emb odim ent 7 |
|---|---|---|---|---|---|---|---|
| Polypropylene | 80 | 80 | 80 | 80 | 80 | 80 | 80 |
| Antimicrobial agent | 0.2 | 0.2 | 0.2 | 0.4 | 1 | 0.2 | 0.2 |
| Ethylene-octene copolymer | 20 | | 20 | 20 | 20 | 15 | 30 |
| Ethylene-butene copolymer | | 20 | | | | | |
| Polypropylene grafted polydimethylsiloxane A | 1 | | | 1 | 1 | 2 | 3 |
| Polypropylene grafted polydimethylsiloxane B | | 1 | | | | | |
| Polypropylene grafted polydimethylsiloxane C | | | 1 | | | | |
| Talc | 15 | 15 | 15 | 15 | 15 | 15 | 15 |
| Lubricant | 0.2 | 0.2 | 0.2 | 0.2 | 0.2 | 0.2 | 0.2 |
| Color powder | 0.5 | 0.5 | 0.5 | 0.5 | 0.5 | 0.5 | 0.5 |
| Stain-resistant property | 3 | 3 | 2 | 3 | 3 | 3 | 3 |
| Antimicrobial property | A | A | B | A | A | A | A |

It can be seen from Embodiments 1-3 that the grafting ratio of polypropylene grafted polydimethylsiloxane also affects a formation of filamentous network structure on the surface of the material. Within a preferred range of the grafting ratio, an antimicrobial effect is better.

**Table 2: Distribution ratio (in parts by weight) of each component of the polypropylene composition of Comparative Examples and test results of various properties**

| | Comp arative Examp le 1 | Comp arative Examp le 2 | Comp arative Examp le 3 | Comp arative Examp le 4 | Comp arative Examp le 5 | Comp arative Examp le 6 |
|---|---|---|---|---|---|---|
| Polypropylene | 80 | 80 | 80 | 80 | 80 | 80 |
| Antimicrobial agent | 0.2 | 0.2 | 0.2 | 0.2 | 0.2 | 0.2 |
| Ethylene-octene copolymer | | | 20 | 20 | | 10 |
| SEBS | 20 | | | | 20 | |
| OBC | | 20 | | | | |
| Polypropylene grafted polydimethylsiloxane A | 1 | 1 | | | | 1 |
| Polydimethylsiloxane | | | 1 | 2 | 1 | |
| Talc | 15 | 15 | 15 | 15 | 15 | 15 |
| Lubricant | 0.2 | 0.2 | 0.2 | 0.2 | 0.2 | 0.2 |
| Color powder | 0.5 | 0.5 | 0.5 | 0.5 | 0.5 | 0.5 |
| Stain-resistant property | 2 | 2 | 2 | 3 | 1 | 2 |
| Antimicrobial property | C | C | C | C | C | C |

**Continued Table 2**

| | Comparative Example 7 | Comparative Example 8 |
|---|---|---|
| Polypropylene | 80 | 80 |
| Antimicrobial agent | 0.2 | 0.2 |
| Ethylene-octene copolymer | 20 | 20 |
| SEBS | | |
| OBC | | |
| Polypropylene grafted polydimethylsiloxane A | 0.3 | 5 |
| Polydimethylsiloxane | | |
| Talc | 15 | 15 |
| Lubricant | 0.2 | 0.2 |
| Color powder | 0.5 | 0.5 |
| Stain-resistant property | 1 | 3 |
| Antimicrobial property | C | C |

It can be seen from Comparative Example 1 or 2 or 5 that other types of elastomers cannot make the surface of the material have a significant filamentary network structure, so an antimicrobial effect is poor.

It can be seen from Comparative Example 3 or 4 that the polydimethylsiloxane without polypropylene grafted can obtain a good stain-resistant property by increasing an amount, but the antimicrobial property is very poor.

It can be seen from Comparative Example 6 that the amount of ethylene-α olefin copolymer will also affect formation of the filamentous network structure on the surface of the material and thus affect a bactericidal effect of the antimicrobial agent.

It can be seen from Comparative Example 7 or 8 that the amount of polypropylene grafted polydimethylsiloxane is too low, the surface of the material has a poor stain-resistant property, bacteria are easy to grow, and the antimicrobial property is comprehensively reduced. If the amount of polypropylene grafted polydimethylsiloxane is too high, it is easy to destroy the filamentous network structure on the surface of the material, instead reducing the antimicrobial property.

## Claims

1. A polypropylene composition, in parts by weight, comprising the following components: 40-99 parts of a polypropylene resin;
15-30 parts of an ethylene-α olefin copolymer;
0.2-1 part of an antimicrobial agent; and
1-3 parts of a polypropylene grafted polydimethylsiloxane.

2. The polypropylene composition according to claim 1, **characterized in that**, in parts by weight, an amount of the antimicrobial agent is 0.2-0.4 parts.

3. The polypropylene composition according to claim 1, **characterized in that**, the ethylene-α olefin copolymer is selected from at least one of ethylene-propylene copolymer, ethylene-hexene copolymer, ethylene-butene copolymer and ethylene-octene copolymer.

4. The polypropylene composition according to claim 3, **characterized in that**, a melt index of the ethylene-α olefin copolymer is 5-30 g/lOmin (190°C, 2.16 kg).

5. The polypropylene composition according to claim 1, **characterized in that**, the antimicrobial agent is selected from at least one of zinc oxide, zeolite supported silver ion or glass-based supported silver ion.

6. The polypropylene composition according to claim 1, **characterized in that**, the polypropylene grafted polydimethylsiloxane has a grafting ratio of 60%-80% and a molecular weight of 600,000-800,000.

7. The polypropylene composition according to claim 1, **characterized in that**, in parts by weight, further comprising 0-30 parts of a filler; the filler is selected from at least one of talc, calcium carbonate, wollastonite, barium sulfate, mica, microsilica, silicon dioxide, magnesium hydroxide and montmorillonite.

8. The polypropylene composition according to claim 1, **characterized in that**, in parts by weight, further comprising 0-10 parts of an auxiliary agent; the auxiliary agent is selected from at least one of a lubricant and a color powder.

9. A preparation method of the polypropylene composition of any one of claims 1 to 8, **characterized in that**, the preparation method is weighing each component according to a weight ratio, adding to a high-speed mixer and mixing for 1-3 minutes with a rotating speed being 1,000-2,000 rpm, to obtain a premix; melting and extruding the premix through a twin-screw extruder, with a temperature of each zone of the screw being 190-230°C, and granulating in vacuum to obtain the polypropylene composition.

10. Use of the polypropylene composition according to any one of claims 1 to 8, **characterized in that**, the polypropylene composition is used in applications of instrument panels, sub-instrument panels, uprights, glove boxes, door panels, door sills, air conditioner housings and other automotive interior parts.

## Patentansprüche

1. Polypropylenzusammensetzung, umfassend die folgenden Komponenten in Gewichtsteilen:
40-99 Teile eines Polypropylenharzes;
15-30 Teile eines Ethylen-α-Olefin-Copolymers;
0,2-1 Teil eines antimikrobiellen Mittels; und
1-3 Teile eines Polypropylen-gepfropften Polydimethylsiloxans.

2. Polypropylenzusammensetzung gemäß Anspruch 1, **dadurch gekennzeichnet, dass** die Menge des antimikrobiellen Mittels 0,2-0,4 Gewichtsteile beträgt.

3. Polypropylenzusammensetzung gemäß Anspruch 1, **dadurch gekennzeichnet, dass** das Ethylen-α-Olefin-Copolymer aus wenigstens einem aus einem Ethylen-Propylen-Copolymer, Ethylen-Hexen-Copolymer, Ethylen-Buten-Copolymer und Ethylen-Octen-Copolymer ausgewählt ist.

4. Polypropylenzusammensetzung gemäß Anspruch 3, **dadurch gekennzeichnet, dass** der Schmelzindex des Ethylen-o-Olefin-Copolymers 5-30 g/10 min beträgt (190°C, 2,16 kg).

5. Polypropylenzusammensetzung gemäß Anspruch 1, **dadurch gekennzeichnet, dass** das antimikrobielle Mittel aus wenigstens einem aus Zinkoxid, Silberionen auf Zeolithträger oder Silberionen auf einem Träger auf Glasbasis ausgewählt ist.

6. Polypropylenzusammensetzung gemäß Anspruch 1, **dadurch gekennzeichnet, dass** das Polypropylen-gepfropfte Polydimethylsiloxan einen Pfropfanteil von 60%-80% und ein Molekulargewicht von 600000-800000 aufweist.

7. Polypropylenzusammensetzung gemäß Anspruch 1, **dadurch gekennzeichnet, dass** es weiterhin 0-30 Gewichtsteile eines Füllstoffs umfasst, wobei der Füllstoff aus wenigstens einem aus Talk, Calciumcarbonat, Wollastonit, Bariumsulfat, Glimmer, Silikastaub, Siliciumdioxid, Magnesiumhydroxid und Montmorillonit ausgewählt ist.

8. Polypropylenzusammensetzung gemäß Anspruch 1, **dadurch gekennzeichnet, dass** es weiterhin 0-10 Gewichtsteile eines Hilfsmittels umfasst, wobei das Hilfsmittel aus wenigstens einem aus einem Gleitmittel und einem Farbpulver ausgewählt ist.

9. Herstellungsverfahren für die Polypropylenzusammensetzung gemäß einem der Ansprüche 1 bis 8, **dadurch gekennzeichnet, dass** das Herstellungsverfahren darin besteht, jede Komponente gemäß einem Gewichtsanteil abzuwiegen, in einen Hochgeschwindigkeitsmischer zu geben und 1-3 Minuten lang zu mischen, wobei die Rotationsgeschwindigkeit 1000-2000 U/min beträgt, wobei man eine Vormischung erhält; die Vormischung zu schmelzen und durch einen Doppelschneckenextruder zu extrudieren, wobei die Temperatur in jeder Zone der Schnecke 190-230°C beträgt, und im Vakuum zu granulieren, wobei man die Polypropylenzusammensetzung erhält.

10. Verwendung der Polypropylenzusammensetzung gemäß einem der Ansprüche 1 bis 8, **dadurch gekennzeichnet, dass** die Polypropylenzusammensetzung in Anwendungen von Instrumententafeln, Teilinstrumententafeln, Pfosten, Handschuhfächern, Türverkleidungen, Türschwellen, Klimaanlagengehäusen und anderen Kraftfahrzeuginnenteilen verwendet wird.

## Revendications

1. Composition de polypropylène, comprenant les composants suivants en parties en poids :
40-99 parties d'une résine polypropylène,
15-30 parties d'un copolymère d'éthylène-α-oléfine,
0,2-1 partie d'un agent antimicrobien, et
1-3 parties d'un polydiméthylsiloxane greffé avec du polypropylène.

2. Composition de polypropylène selon la revendication 1, **caractérisée en ce que** la quantité dudit agent antimicrobien est de 0,2-0,4 parties en poids.

3. Composition de polypropylène selon la revendication 1, **caractérisée en ce que** ledit copolymère d'éthylène-α-oléfine est choisi parmi au moins l'un parmi un copolymère d'éthylène-propylène, un copolymère d'éthylène-hexène, un copolymère d'éthylène-butène, et un copolymère d'éthylène-octène.

4. Composition de polypropylène selon la revendication 3, **caractérisée en ce que** l'indice de viscosité dudit copolymère d'éthylène-α-oléfine est de 5-30 g/10 min (190°C, 2,16 kg).

5. Composition de polypropylène selon la revendication 1, **caractérisée en ce que** ledit agent antimicrobien est choisi parmi au moins l'un parmi oxyde de zinc, ions d'argent sur un support de zéolite, ou ions d'argent sur un support à base de verre.

6. Composition de polypropylène selon la revendication 1, **caractérisée en ce que** ledit polydiméthylsiloxane greffé avec du polypropylène présente un rapport de greffage de 60 % à 80 %, et un poids moléculaire de 600000-800000.

7. Composition de polypropylène selon la revendication 1, **caractérisée en ce qu'**elle comprend en outre 0-30 parties en poids d'une charge, ladite charge est choisi parmi au moins l'un parmi talc, carbonate de calcium, wollastonite, sulfate de baryum, mica, microsilice, dioxyde de silicium, hydroxyde de magnésium, et montmorillonite.

8. Composition de polypropylène selon la revendication 1, **caractérisée en ce qu'**elle comprend 0-10 parties en poids d'un agent auxiliaire, ledit agent auxiliaire est choisi parmi au moins l'un parmi un lubrifiant et une poudre de colorant.

9. Méthode de préparation de la composition de polypropylène selon l'une quelconque des revendications 1 à 8, **caractérisée en ce que** ladite méthode de préparation consiste à peser chaque composant selon un rapport de poids, ajouter dans un mélangeur à grande vitesse, et mélanger pendant 1-3 minutes, la vitesse de rotation étant de 1000 à 2000 tr/min, pour obtenir un mélange-maître, fondre et extruder ledit mélange-maître par une extrudeuse à deux vis, la température de chaque zone de la vis étant de 190-230°C, et granuler sous vide pour obtenir la composition de polypropylène.

10. Utilisation de la composition de polypropylène selon l'une quelconque des revendications 1 à 8, **caractérisée en ce que** ladite composition de polypropylène est utilisée dans des applications de tableaux de bord, soustableaux de bord, piliers, boîte à gants, panneaux de porte, seuils de porte, boîtier de climatisation, et autres composants intérieurs d'automobiles.
